(19) Europäisches Patentamt
European Patent Office
Office européen des brevets

(11) Publication number : 0 451 998 A2

# (12) EUROPEAN PATENT APPLICATION

(21) Application number : 91302743.9

(22) Date of filing : 28.03.91

(51) Int. Cl.$^5$ : C08F 236/18, C09J 111/02

(30) Priority : 02.04.90 US 502753

(43) Date of publication of application :
16.10.91 Bulletin 91/42

(84) Designated Contracting States :
DE FR GB

(71) Applicant : E.I. DU PONT DE NEMOURS AND COMPANY
1007 Market Street
Wilmington Delaware 19898 (US)

(72) Inventor : Ahramjian, Leo
2122 Valley Road
Wilmington, Delaware 19810 (US)
Inventor : Hamlet, Charles, Wilson, Jr.
6504 Mandeville Court
Louisville, Kentucky 40228 (US)

(74) Representative : Jones, Alan John et al
CARPMAELS & RANSFORD 43 Bloomsbury Square
London, WC1A 2RA (GB)

## (54) Process for stabilizing chloroprene copolymer latex.

(57) Chloroprene and an alpha, beta-unsaturated carboxylic acid are copolymerized in an aqueous emulsion in the presence of polyvinyl alcohol and an organic sulfur-containing chain transfer agent to obtain a chloroprene copolymer latex in which the gel content is from 15% to 40% based on the weight of the latex copolymer, and the pH of the latex is maintained in the range of the highty acidic pH occurring at polymerization up to a pH of 6.5 ; whereby the latex is capable of being stored for at least 4 weeks and of being useful thereafter as a contact adhesive.

EP 0 451 998 A2

## FIELD OF THE INVENTION

This invention relates to improved chloroprene copolymer latexes, which are stabilized against gel increases on storage and suitable for use as non-solvent contact adhesives.

## BACKGROUND OF THE INVENTION

U. S. Patent 4,141,875 discloses the preparation of an aqueous latex having a high level of colloidal stability obtained by aqueous emulsion polymerization of chloroprene and selected amounts of an alpha, beta-unsaturated carboxylic acid comonomer, in the presence of polyvinyl alcohol colloid stabilizer, and a chain transfer agent for controlling the molecular weight and gel content of the resultant copolymer. The patent discloses that because of the presence of the acid comonomer, the pH of the emulsion and thus of the resultant latex is generally 2.5 to 3.0.

The patent also discloses several storage stability problems arising from the low pH of the latex. First, the polymer in the latex slowly loses HCl during storage, and excess alkaline material or a buffering system must be added to the latex to react with the HCl formed. Second, as the latex ages during storage, the gel content of the latex increases. The patent discloses that this can be inhibited by neutralizing the latex to pH 7.0 and providing a buffering system to minimize any change in the neutralized pH.

The latex of U.S. Patent 4,141,875 has had commercial success in the field of adhering paper to metal foil, i.e., as a foil-laminating adhesive. The patent discloses that the percentage of gel present in the latex is from 10 to 95% but that at least 50% by weight of the polymer present should be gel in order to overcome the tendency of the metal foil to form wrinkles in the foil-laminating process. While this high level of gel is required to solve the problem of wrinkling, it does not adversely affect the strength of the bonds obtained in foil lamination.

The latex of U. S. Patent 4,141,875 is less suitable for use as a contact adhesive mainly because contact adhesive bonds are quite sensitive to the percentage of gel in the latex. In order to be suitable for preparation of contact adhesives, the percentage of gel in the latex should be at least 15% of the weight of the polymer so as to provide cohesive strength to the adhesive bond, but no more than 40% by weight to avoid bond failure at the glue lines of the surfaces being bonded, i.e. polymer in gel form is not available for causing adhesion by the contact adhesion method. Thus, it becomes critical that a low % of gel is formed during emulsion polymerization and also that the amount of gel not increase significantly during storage of the latex. When one skilled in the art follows the teaching of U. S. Patent 4,141,875 and adjusts the pH of the latex to 7 to both neutralize HCl evolved from the polymer and to inhibit gel formation during storage, less than optimum results are obtained when the latex is used for the preparation of contact adhesives. The increase in gel content during storage of the latex is still too high, resulting in poor bonds in contact adhesives prepared from said latex.

Thus, an improved process is needed to produce chloroprene copolymer latices for contact adhesive applications wherein the latex must have relatively low gel content, high resistance to gel increase during storage, along with adequate colloidal stability and chemical stability.

## SUMMARY OF THE INVENTION

It has now been discovered that at the low gel contents required for the contact adhesive utility, the latex should not be neutralized. In fact it has been discovered that by maintaining the latex on the acid side, the required gel stability can be obtained along with adequate colloidal stability and chemical stability.

In one embodiment of the present invention it has been found that the above-discussed need unsatisfied by the prior art can be unexpectedly achieved by a process for producing a chloroprene copolymer latex which comprises polymerizing an aqueous emulsion of chloroprene and an alpha, beta-unsaturated carboxylic acid in the presence of polyvinyl alcohol and an organic sulfur-containing chain transfer agent, wherein the resultant latex has a pH of no greater than 3.0, in which the improvement comprises carrying out the polymerization so that the gel content of the resultant latex is from 15% to 40% based on the weight of the copolymer and maintaining during storage the pH of the latex in the range of the polymerization pH, i.e., the pH present upon completion of the polymerizaton, up to a pH of 6.5; whereby the latex is capable of being stored for at least 4 weeks and of being useful thereafter for preparation of contact adhesives.

Thus, the pH of the latex can be maintained within the usual polymerization range of pH 2.5 to 3.0. Optionally, the pH can be adjusted within the range of slightly greater than the polymerization pH to as high as 6.5. Surprisingly, colloidal stability and chemical stability remain adequate so that the latex does not coagulate during storage and handling up to the time the contact adhesive is to be compounded and there is no evidence of any appreciable build-up of HCl in the latex.

In another embodiment of the present invention, it has been found that the above-discussed need of the

prior art can be unexpectedly achieved by a process for producing a chloroprene copolymer latex which comprises polymerizing an aqueous emulsion of chloroprene and an alpha,beta-unsaturated carboxylic acid in the presence of polyvinyl alcohol and an organic sulfur-containing chain transfer agent, wherein the resultant latex has a pH of no greater than 3.0, the improvement comprising carrying out the polymerization so that the gel content is from 15 to 40% based on the weight of the copolymer and adjusting the pH of the latex to a value within the range of 3.0 to 6.5 by the addition of a base, thereby increasing the gel stability of the latex during storage without a sacrifice in chemical stability or colloidal stability.

## DESCRIPTION OF THE PREFERRED EMBODIMENTS

The polymerization process for preparing polyvinyl alcohol colloid stabilized chloroprene copolymer latex is disclosed in U.S. Patent 4,141,875 which is hereby incorporated by reference. For a more detailed discussion of the polymerization process, monomers and additives, see the above referenced patent. Some of this discussion will be summarized hereinafter, followed by discussion of the modification of the present invention.

The polymerizations of this invention are carried out in an aqueous suspension wherein the polyvinyl alcohol is used as the colloidal stabilizer. The amount of polyvinyl alcohol to be used in the polymerization system will, in general, range from 3 to 10 parts per 100 parts by weight of total monomer, with 4-6 parts being the preferred range.

The polymerization system may optionally contain from 0.01-1% by weight, based on monomers, of an acid-stable anionic surface active agent. Typical of these are the surface active agents containing sulfate or sulfonate groups such as the water-soluble salts of naphthalene- or $C_{1-4}$-alkylnaphthalenesulfonic acids or formaldehyde condensates thereof, sulfated fatty alcohols containing 8-18 carbon atoms, alkylbenzenesulfonic acids containing 8-18 carbon atoms in the alkyl chains, or sulfated condensates of phenol,$C_{1-18}$-alkylphenols, or $C_{8-18}$-fatty alcohols with ethylene oxide. The cations of the salts are usually sodium, potassium, or ammonium ions. It is preferred to use a surfactant when less than 4 parts of polyvinyl alcohol is used to enhance stability of the emulsion during polymerization and subsequent handling of the latex.

The aqueous suspension of chloroprene to be polymerized contains 0.4 to 10 mole percent of an alpha,beta-unsaturated carboxylic acid, based on total monomer content. Examples of such acid monomers may be represented by the following structure

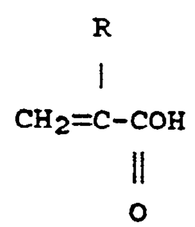

wherein R is hydrogen, an alkyl radical containing 1-4 carbon atoms, or a carboxymethyl radical. Examples of suitable monomers are acrylic acid, methacrylic acid, 2-ethylacrylic acid, 2-propylacrylic acid, 2-butylacrylic acid, and itaconic acid [alpha-(carboxymethyl) acrylic acid]. Of these, the preferred acid is methacrylic acid because of its reactivity and ready availability.

Inclusion of the carboxyl-containing comonomer is advantageous because it contributes to the colloidal stability of the latex and provides ionic crosslinking sites necessary in the compounded contact adhesives. The preferred proportion is 1-5 mole percent, 2-4% being particularly preferred based on total monomer content. A particularly desirable combination of good colloidal stability and adhesive properties is obtained when 5 parts of PVA is used with 100 parts of a monomer mixture containing 2-3 mole percent of the carboxylic comonomer.

A small amount, up to 10%, of the chloroprene can be replaced with another copolymerizable monomer which does not contain a free carboxylic acid group. Representative comonomers that can be used in the process include vinyl aromatic compounds such as styrene, the vinyl toluenes, and vinylnaphthalenes; aliphatic conjugated diolefin compounds such as 1,3-butadiene, isoprene, 2,3-dimethyl-1,3-butadiene, and 2,3-dichloro-1,3-butadiene; vinyl ethers, esters, and ketones such as methyl vinyl ether, vinyl acetate, and methyl vinyl ketone; esters, amides, and nitriles of acrylic and methacrylic acids such as ethyl acrylate, methyl methacrylate, methacrylamide, and acrylonitrile.

A chain-transfer agent is used in the polymerization system to control the molecular weight of the copolymer. The preferred range is about 0.3 to about 2 parts by weight per 100 parts of monomers. The preferred range is 0.5-1.5 parts by weight.

The chain-transfer agents are the conventional organic sulfur-containing chain-transfer agents such as alkyl mercaptans and the dialkyl xanthogen disulfides. The alkyl mercaptans generally have chain lengths of about from 4-20 carbon atoms. The alkyl radicals may be straight-chained or branched, and the mercaptans may be primary, secondary, or tertiary. It is preferred that the alkyl radicals have about 8-16 carbon atoms. Examples include octyl mercaptan, dodecyl mercaptan, tert-dodecyl mercaptan, tridecyl mercaptan, and mixtures of mercaptans derived from coconut oil (often called lauryl mercaptan or technical dodecyl mercaptan).

The dialkyl xanthogen disulfides can be represented by the structure

$$RO-\underset{\underset{S}{\|}}{C}-S-S-\underset{\underset{S}{\|}}{C}-OR'$$

wherein R and R′ are alkyl radicals having 1-8 carbon atoms. Examples of suitable alkyl radicals are methyl, ethyl, propyl, isopropyl, and the various isomeric butyl, amyl, heptyl, heptyl, and octyl radicals. The preferred dialkyl xanthogen disulfides are those in which each alkyl radical has 1-4 carbon atoms, especially diisopropyl xanthogen disulfide.

The polymerization is carried out by forming an aqueous emulsion of the monomers, the chain-transfer agent, the polyvinyl alcohol, and, if used, the acid-stable surface active agent as described in U.S. patent 4,141,875. The concentration of total monomer in the emulsion is not critical but will usually range from 40 to 55%. The pH of the resultant latex will not be greater than 3.0 and will generally be in the range of 2.5 to 3.0.

The temperature of polymerization may range from 30°-55°C, preferably between 40° and 50°C.

In accordance with the present invention, a latex is produced having a gel content in the range of 15 to 40% by weight of the polymer composition. The preferred gel content of the latex is in the range of 15 to 30% by weight of the polymer composition. The initial gel content after polymerization can be controlled by the temperature of polymerization and by the amount of chain-transfer agent used. This initial gel content is generally higher when the temperature of polymerization is increased and lower when the amount of chain-transfer agent is increased.

If the pH of the latex is maintained at the polymerization pH during storage, e.g., at least 4 weeks at ambient temperature, it has been found that chemical stability is satisfactory and the amount of gel present in the latex does not vary greatly, i.e., there is very little increase in the gel content of the latex. Colloidal stability is generally adequate so that premature coagulation does not occur.

If the pH of the latex is adjusted to 7.0 or higher, colloidal stability will increase, but gel stability will suffer, since a substantial increase in gel content will occur during storage.

In accordance with one embodiment of the present invention, the pH of the latex is adjusted to a value in the range of 3.0 to 6.5, preferably 3.5 to 6.5, and even more preferably 3.5 to 6.0, after completion of the polymerization by addition of an inorganic base such as sodium hydroxide, potassium hydroxide,or aqueous ammonia, or an organic base such as diethanolamine or triethanolamine. It is preferred, for optimum storage stability, that a weak base such as diethanolamine or triethanolamine is used for the pH adjustment. It is also preferred that the base be added to the latex as an aqueous solution. The most preferred pH range is from 4.5 to 5.5. This embodiment produces the best combination of gel stability and long term colloidal stability, e.g., at least one year, without sacrifice in chemical stability.

Latices produced in accordance with the present invention, especially with base addition as described above, have storage lives exceeding six months and even one year, with the resultant latex still being useful for preparation of contact adhesives.

In the following Examples, all parts and percentages are by weight unless otherwise indicated.

## EXAMPLES

### Example 1

A polyvinyl alcohol stabilized chloroprene/methacrylic acid copolymer latex was prepared in the following manner. A solution of 97 parts chloroprene, 3 parts methacrylic acid, 0.6 parts Clindrol Superamide 1000 surfactant (diethanolamine amide of mixed cocoa fatty acids), and 0.405 parts dodecyl mercaptan was emulsified with an aqueous solution of 4.08 parts polyvinyl alcohol (degree of polymerization 87-88%) in 106.3 parts water. 1.5 parts of a 10% aqueous solution of sodium sulfite was then added and polymerization was initiated by addition of a 5% aqueous potassium persulfate solution. The polymerization was carried out to full monomer conversion (above 98%) at a temperature of 45°C. At the end of the polymerization, 1 part of an aqueous emulsion containing 0.02 parts phenothiazine and 0.02 parts p-tert-butylcatechol was added as a stabilizer. The pH of the latex was 2.7 and the initial gel content was 25% as determined by the procedure disclosed in U.S. Patent 4,141,875. Long-term gel stability was determined by aging a sample of the latex for two weeks at 50°C after which the gel content had increased to 296 and the result is reported in Table 1.

Comparative Examples 1-4 and Examples 2 and 3

The pH of four samples of the latex prepared in Example 1 was adjusted to the levels shown in Table 1 by addition of diethanolamine (DEA) or triethanolamine (TEA). Gel content of the latices, after aging for two weeks at 50°C, is also shown.

TABLE 1

| Example | pH | Base | % Gel Original | % Gel After two Weeks @ 50°C | % Gel Increase After two Weeks @ 50°C |
|---|---|---|---|---|---|
| Example 1 | 2.7 | None | 25.0 | 29.0 | 4.0 |
| Comparative Example 1 | 7.0 | DEA* | 27.4 | 41.0 | 13.6 |
| Comparative Example 2 | 9.0 | DEA* | 24.0 | 60.0 | 36.0 |
| Example 2 | 5.0 | DEA* | 25.0 | 32.7 | 7.7 |
| Comparative Example 3 | 7.0 | TEA** | 25.6 | 34.0 | 8.4 |
| Comparative Example 4 | 8.5 | TEA** | 25.0 | 46.0 | 21.0 |
| Example 3 | 5.0 | TEA** | 25.0 | 32.4 | 7.4 |

* Diethanolamine
** Triethanolamine

The latices of Examples 1, 2, and 3 exhibit good gel stability under accelerated aging testing which corresponds to storage at ambient temperature (18-20°C) for one year and during this time colloidal stability was observed to be satisfactory. The best gel stability is obtained at the lowest pH. There was no evidence of detrimental increase of HCl in the latex during storage.

The latices of Examples 1, 2, and 3 can be made into contact adhesives by conventional techniques using conventional compounding agents such as tackifier resins and ionic crosslinking agents such as ZnO and NaOH. For example, after storage, to 100 parts by weight of chloroprene copolymer in the latex would be added on a dry basis 10 parts by weight of an emulsified rosin acid tackifier, such as Dresinol 215 (Hercules Chemical Co.), 20 parts of an emulsified rosin ester tackifier, such as Aquatac 5090 (Arizona Chemical), 2 parts by weight of a hindered phenol antioxidant such as Wingstay L (Goodyear), and 4 parts ZnO dispersed in a NaOH solution. These ingredients are mixed together conveniently at room temperature to form the contact adhesive. These adhesives provide the unusual combination of contactability (long "open" time) and high cohesive strength, both at room and elevated temperatures.

## Claims

1. In a process for producing a chloroprene copolymer latex by polymerizing an aqueous emulsion of chloroprene and an alpha,beta-unsaturated carboxylic acid in the presence of polyvinyl alcohol and an organic sulfur-containing chain transfer agent, wherein the resultant latex has a pH of no greater than 3.0, the improvement comprising:
   carrying out the polymerization so that the gel content of the resultant latex is from 15 to 40% by weight of the copolymer; maintaining during storage the pH of the latex at the polymerization pH; optionally, adding base to the latex to maintain the pH in the range of the polymerization pH up to a pH of 6.5; whereby the latex is capable of being stored for at least 4 weeks and of being useful thereafter as a contact adhesive.

2. The process as recited in claim 1 wherein the pH of the latex is maintained in the range of 2.5 to 6.5.

3. The process as recited in claim 1 wherein the pH of the latex is maintained in the range of 3.5 to 6.5.

4. The process as recited in claim 1 wherein the pH of the latex is maintained in the range of 3.5 to 6.0.

5. The process as recited in claim 1 wherein the pH of the latex is maintained in the range of 4.5 to 5.5.

6. The process as recited in any one of claim 1 to 5 wherein the chloroprene copolymer latex has a gel content of from 15 to 30% by weight based on the weight of the latex.

7. The process as recited in any one of claim 1 to 6 wherein the alpha,beta-unsaturated carboxylic acid has the formula

   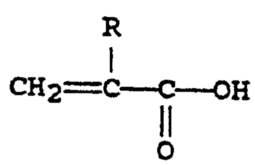

   where R is hydrogen, $C_1$-$C_4$ alkyl, or the carboxymethyl group.

8. The process as recited in any one of claims 1 to 7 wherein the base is an organic base selected from the group consisting of diethanolamine and triethanolamine.

9. The process as recited in any one of claim 1 to 8 wherein an anionic, acid-stable, surface active agent is present during polymerization in an amount of 0.01-1.0% based on the total weight of monomers.

10. The process as recited in any one of claims 1 to 9 wherein the polymerization is continued to at least 85% conversion of the monomers.

11. In the process of producing a chloroprene copolymer latex of any one of claims 1 to 10 and additionally after storage of said latex, compounding said latex into a contact adhesive.

12. Contact adhesive made by the process of claim 11.

13. In the process for producing a chloroprene copolymer latex by polymerizing an aqueous emulsion of chloroprene and an alpha,beta-unsaturated carboxylic acid in the presence of polyvinyl alcohol and an organic sulfur-containing chain transfer agent wherein the resultant latex has a pH of no greater than 3.0, the improvement comprising:
    carrying out the polymerization so that the gel content of the resultant latex is from 15 to 40% by weight based on the weight of the latex; and adjusting the pH of the latex to a value within the range of 3.0 to 6.5 by the addition of a base, thereby increasing the gel stability of the latex during storage without sacrificing chemical and colloidal stability.

**14.** The process as recited in claim 13 wherein the chloroprene copolymer latex has a gel content of from 15 to 30% by weight based on the weight of the latex.

**15.** The process as recited in claim 13 or 14 wherein the pH of the latex is adjusted to a value within the range of 3.5 to 6.5.

**16.** The process as recited in claim 13 or 14 wherein the pH of the latex is adjusted to a value within the range of 3.5 to 6.0.

**17.** The process as recited in claim 13 or 14 wherein the pH of the latex is adjusted to a value within the range of 4.5 to 5.5.

**18.** The process as recited in claim 13 or 14 wherein the pH of the latex is adjusted to 5.0.

**19.** The process as recited in any one of claims 13 to 18 wherein the alpha,beta-unsaturated carboxylic acid has the formula

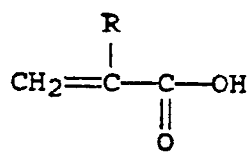

where R is hydrogen, $C_1$-$C_4$ alkyl, or the carboxymethyl group.

**20.** The process as recited in any one of claims 13 to 19 wherein the base is an organic base selected from the group consisting of diethanolamine and triethanolamine.

**21.** The process as recited in any one of claims 13 to 20 wherein an anionic, acid-stable, surface active agent is present in the polymerization emulsion in an amount of 0.01-1.0% based on the total weight of monomers.

**22.** The process as recited in any one of claims 13 to 21 wherein the polymerization is continued to at least 85% conversion of the monomers.

**23.** A chloroprene alpha,beta-unsaturated carboxylic acid copolymer latex produced according to the process of any one of claims 13 to 22.